# EUROPEAN PATENT APPLICATION

(11) **EP 4 372 699 A1**
(43) Date of publication of application: **22.05.2024**
(21) Application number: 23210019.8
(22) Date of filing: 15.11.2023
(51) Int. Cl.: G06V 20/56

(54) **METHOD FOR DETECTING COLLISION DATA, DRIVING DEVICE AND MEDIUM**

(30) Priority: 15.11.2022 CN 202211430628
(71) Applicant: Anhui NIO Autonomous Driving Technology Co., Ltd., Hefei, Anhui 230601 (CN)
(72) Inventor: CHEN, Weijun, Hefei, Anhui Province, 230601 (CN)
(74) Representative: Vossius & Partner Patentanwälte Rechtsanwälte mbB

(57) **Abstract**

The disclosure provides a method for detecting collision data, a driving device and a medium. The method includes: obtaining scenario data that includes perception data about a surrounding target object and driving data of the object to be detected; calculating a collision risk score based on the perception data and the driving data separately to obtain a first collision risk score for the perception data and a second collision risk score for the driving data; obtaining a collision confidence level for the scenario data based on the first collision risk score and the second collision risk score; and if the collision confidence level is greater than a preset confidence threshold, determining the scenario data as collision scenario data, and/or recalling the scenario data, thereby realizing objective collection of the collision scenario data with a higher collision confidence level, and improving the reliability of the collision scenario data, thus helping improve the performance of autonomous driving perception and decision-making algorithms, and improving the reliability of vehicle abnormality diagnosis, accident liability determination, etc.

## Description

### Technical Field

The disclosure relates to the field of image processing technologies, and specifically provides a method for detecting collision data, a driving device and a control method therefor, and a medium.

### Background Art

Collisions occurring in a driving process of vehicles and other driving devices are considered as serious accidents. A mature autonomous driving system needs to make a decision minimize a probability of occurrence of such dangerous scenarios. Collision scenario data of real collisions is often of great significance and value for improvement in the performance of autonomous driving perception and decision-making algorithms, vehicle abnormality diagnosis, and accident liability determination.

Generally, the collection of collision scenario data relies on manual collection of witness statements. However, witness statements contain personal subjective opinions, resulting in relatively low reliability of the collected collision scenario data, which reduces the performance of autonomous driving perception and decision-making algorithms and the reliability of vehicle abnormality diagnosis, accident liability determination, etc.

### Summary

In order to overcome the above defects, the disclosure provides a method for detecting collision data, a driving device and a control method therefor, and a medium, to solve or at least partially solve the technical problem that the reliability of collected collision scenario data is relatively low, which reduces the performance of autonomous driving perception and decision-making algorithms and the reliability of vehicle abnormality diagnosis, accident liability determination, etc.

In a first aspect, the disclosure provides a method for detecting collision data, including:
obtaining scenario data of an object to be detected, where the scenario data includes at least perception data about a surrounding target object and driving data of the object to be detected;
calculating a collision risk score based on the perception data, to obtain a first collision risk score for the perception data, and calculating a collision risk score based on the driving data, to obtain a second collision risk score for the driving data;
obtaining a collision confidence level for the scenario data based on the first collision risk score for the perception data and the second collision risk score for the driving data; and
if the collision confidence level is greater than a preset confidence threshold, determining the scenario data as collision scenario data, and/or recalling the scenario data.

In a second aspect, the disclosure provides a method for controlling a driving device, including:
detecting scenario data of the driving device based on the method for detecting collision data according to any one of the above; and
when it is determined that the scenario data of the driving device is collision scenario data, controlling the driving device to perform a corresponding operation, so as to avoid collisions.

In a third aspect, there is provided a driving device, including a driving device body, a processor, and a storage apparatus adapted to store a plurality of program codes, where the program codes are adapted to be loaded and executedl by the processor to perform the method for detecting collision data according to any one of the above or the above method for controlling a driving device.

In a fourth aspect, there is provided a computer-readable storage medium. The computer-readable storage medium stores a plurality of program codes, where the program codes are adapted to be loaded and executed by a processor to perform the method for detecting collision data in any one of the above technical solutions or the above method for controlling a driving device.

The above one or more technical solutions of the disclosure have at least one or more of the following beneficial effects:

In the technical solutions implementing the disclosure, after the collision scenario data including the perception data about the surrounding target object and the driving data of the object to be detected are obtained, collision risk scoring is performed based on the perception data and the driving data separately, to obtain the first collision risk score for the perception data and the second collision risk score for the driving data; the collision confidence level for the scenario data is obtained based on the first collision risk score for the perception data and the second collision risk score for the driving data; and if the collision confidence level is greater than the preset confidence threshold, the scenario data is determined as collision scenario data, and/or the scenario data is recalled, thereby realizing objective collection of the collision scenario data with a higher collision confidence level, and improving the reliability of the collision scenario data, thus helping improve the performance of autonomous driving perception and decision-making algorithms, and improving the reliability of vehicle abnormality diagnosis, accident liability determination, etc.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a method for detecting collision data according to an embodiment of the disclosure;
FIG. 2 is a schematic diagram of motion trajectory curves between an object to be detected and a target object at different angles;
FIG. 3 is a schematic diagram of predicted driving trajectories of a target object that are obtained based on perception data;
FIG. 4 is a schematic diagram of radar alarm levels;
FIG. 5 is a schematic flowchart of main steps of a method for controlling a driving device according to an embodiment of the disclosure; and
FIG. 6 is a block diagram of a main structure of a driving device according to an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

Generally, the collection of collision scenario data relies on manual collection of witness statements. However, witness statements contain personal subjective opinions, resulting in relatively low reliability of the collected collision scenario data, which reduces the performance of autonomous driving perception and decision-making algorithms and the reliability of vehicle abnormality diagnosis, accident liability determination, etc.

In view of this, the disclosure provides the following technical solutions in order to solve the above technical problems.

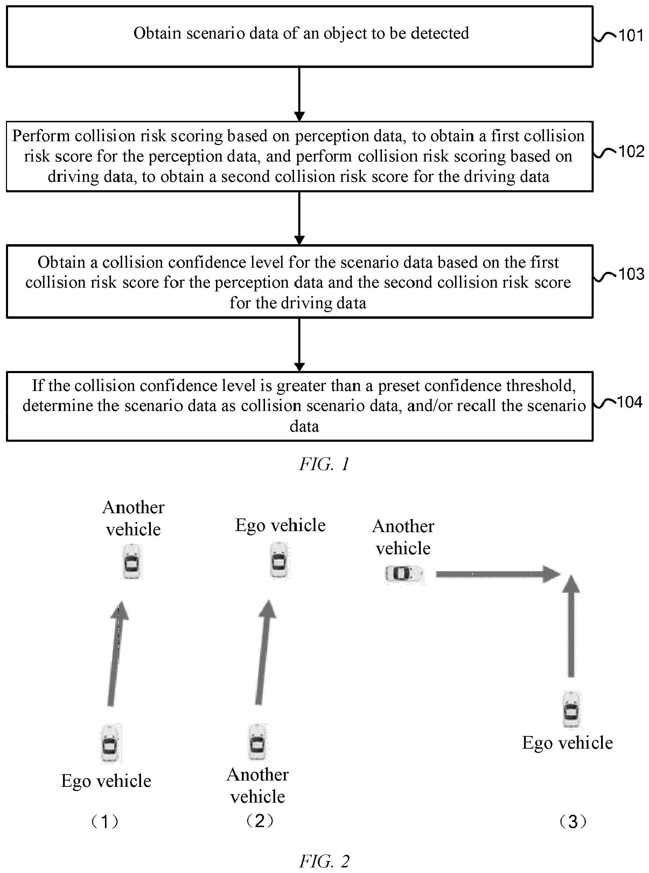

FIG. 1 is a schematic flowchart of main steps of a method for detecting collision data according to an embodiment of the disclosure. As shown in FIG. 1, the method for detecting collision data in this embodiment of the disclosure mainly includes step 101 to step 104 below.

Step 101: Obtain scenario data of an object to be detected.

In a specific implementation process, a variety of perceptional sensors, such as a forward-facing camera, a front surround-view camera, a rear-facing camera, a rear surround-view camera, a forward-facing radar, a front side-facing BSD radar, a forward-facing ultrasonic radar, a forward-facing lidar, a rear-facing radar, a rear side-facing BSD radar, a rear-facing ultrasonic radar, and a rear-facing lidar, may be disposed on an object to be detected such as a vehicle. Perception data about a surrounding target object may be collected, by using a perceptional sensor, by the object to be detected. The perception data may include position information of dynamic objects, speeds of the dynamic objects, position information of static objects, and the like in a current scenario. The dynamic objects may include other vehicles, pedestrians, etc., and the static objects may include lane lines, traffic signs, etc.

In a specific implementation process, a detection sensor that detects information related to the object to be detected, such as an acceleration sensor, may also be disposed on the object to be detected such as a vehicle. Driving data of the object to be detected may be collected by using the detection sensor. The driving data of the object to be detected may include a lateral acceleration of the object to be detected, a lateral acceleration change rate of the object to be detected, a longitudinal acceleration of the object to be detected, a longitudinal acceleration change rate of the object to be detected, etc. The lateral acceleration change rate of the object to be detected is a ratio of a difference between a lateral acceleration of the object to be detected at a start time within a preset period of time and a lateral acceleration of the object to be detected at an end time within the period of time to the period of time. The longitudinal acceleration change rate of the object to be detected is a ratio of a difference between a longitudinal acceleration of the object to be detected at a start time within a preset period of time and a longitudinal acceleration of the object to be detected at an end time within the period of time to the period of time.

Step 102: Perform collision risk scoring based on the perception data, to obtain a first collision risk score for the perception data, and perform collision risk scoring based on the driving data, to obtain a second collision risk score for the driving data.

In a specific implementation process, the perception data may be inputted into a corresponding scorer for collision risk scoring, to obtain the first collision risk score for the perception data.

Specifically, the first collision risk score for the perception data may be obtained according to the following steps.
(1) Status information of the target object is determined based on the perception data.

In a specific implementation process, a predicted driving trajectory of the target object and/or a distance between the target object and the object to be detected may be determined based on the perception data.

In a specific implementation process, motion trajectory curves between the object to be detected and the target object at different angles may be obtained based on perception data obtained at different angles. FIG. 2 is a schematic diagram of motion trajectory curves between the object to be detected and the target object at different angles. As shown in FIG. 2, part (1) in FIG. 2 shows a motion trajectory curve for a possible active collision, that is, a motion trajectory curve that an ego vehicle collides with another vehicle. Part (2) in FIG. 2 shows a motion trajectory curve for a possible passive collision, that is, a motion trajectory curve that the another vehicle collides with the ego vehicle. Part (3) in FIG. 2 shows a motion trajectory curve for a possible head-on collision, that is, a motion trajectory curve when the ego vehicle collides with the another vehicle at a point where they meet.

A motion trajectory curve for a possible head-on collision is used as an example for description below.

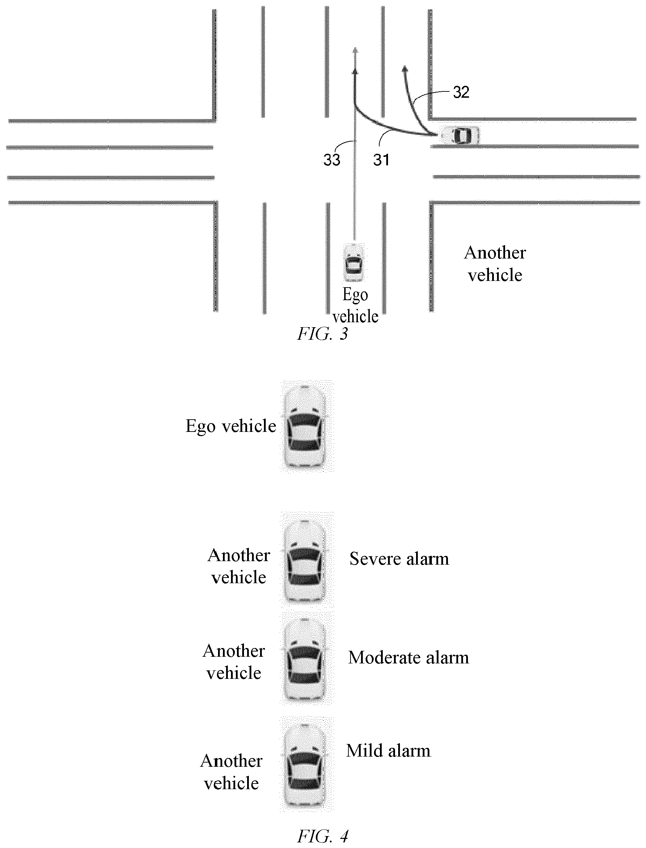

FIG. 3 is a schematic diagram of predicted driving trajectories of the target object that are obtained based on the perception data. As shown in FIG. 3, at a crossroad, the ego vehicle may capture images of the another vehicle by using a forward-facing camera, a front surround-view camera, etc., analyzes these images to determine a lane and a speed of the another vehicle, and based on this, makes a prediction to obtain predicted driving trajectories of the another vehicle, for example, a first predicted driving trajectory 31 and a second predicted driving trajectory 32 in FIG. 3.

In a specific implementation process, when the target object enters a radar detection range of the object to be detected, an early radar warning is triggered, and a distance between the target object and the object to be detected is obtained by a radar.

(2) The probability of collision between the object to be detected and the target object is determined based on status information of the object to be detected and the status information of the target object.

In a specific implementation process, when the status information of the target object includes one predicted driving trajectory, a first probability of collision between the object to be detected and the target object on the predicted driving trajectory as the probability of collision between the object to be detected and the target object based on current path planning of the object to be detected (referring to the current path planning 33 in FIG. 3).

Specifically, a probability that the target object meets the object to be detected, when the target object travels at a corresponding speed on the predicted driving trajectory and when the object to be detected travels at a corresponding speed according to the current path planning, may be calculated starting from a moment when the target object is detected, and the probability is used as the first probability of collision between the object to be detected and the target object on the predicted driving trajectory.

In a specific implementation process, when the status information of the target object includes a plurality of predicted driving trajectories, a second probability of collision between the object to be detected and the target object on each predicted driving trajectory may be determined based on the current path planning of the object to be detected, and an overall probability of collision between the object to be detected and the target object is determined as the probability of collision between the object to be detected and the target object based on the second probabilities of collision corresponding to all the predicted driving trajectories.

Specifically, a probability that the target object meets the object to be detected, when the target object travels at a corresponding speed on each predicted driving trajectory and when the object to be detected travels at a corresponding speed according to the current path planning, may be calculated starting from a moment when the target object is detected, and the probability is used as the second probability of collision between the object to be detected and the target object on each predicted driving trajectory. The second probabilities of collision corresponding to all the predicted driving trajectories are processed through weighted averaging or other methods to obtain the determined comprehensive probability of collision between the object to be detected and the target object.

Referring to FIG. 3, for the first predicted driving trajectory 31, a probability that the another vehicle may meet the ego vehicle may be calculated to be relatively high, and the second probability of collision on the predicted driving trajectory is relatively high. For the second predicted driving trajectory 32, a probability that the another vehicle may meet the ego vehicle may be calculated to be relatively low, and the second probability of collision on the predicted driving trajectory is relatively low. It can be concluded, through comprehensive evaluation, that the comprehensive probability of collision is moderate.

In a specific implementation process, when the status information of the target object includes the distance between the target object and the object to be detected, different probabilities of collision may be obtained based on different distances.

Specifically, FIG. 4 is a schematic diagram of radar alarm levels. As shown in FIG. 4, as the distance between the object to be detected and the target object decreases, an alarm level increases. In other words, the probability of collision between the object to be detected and the target object becomes larger. In FIG. 4, as the distance between the ego vehicle and the another vehicle increases, the alarm levels are sequentially a mild alarm, a moderate alarm, and a severe alarm.

(3) The first collision risk score for the perception data is determined based on the probability of collision.

In a specific implementation process, when the status information of the target object includes only the predicted driving trajectory of the target object or only the distance between the target object and the object to be detected, the first collision risk score for the perception data may be obtained based on their respective probabilities of collision. When the status information of the target object includes both the predicted driving trajectory of the target object and the distance between the target object and the object to be detected, the first collision risk score for the perception data may be obtained by performing weighted averaging on their respective collision risk scores after the collision risk scores are obtained.

In a specific implementation process, the driving data may be inputted into a corresponding scorer for collision risk scoring, so as to obtain the first collision risk score for the driving data.

In a specific implementation process, when the object to be detected collides with the target object, an acceleration of the object to be detected may exhibit a significant change curve. For example, if a vehicle is subjected to other forces different from braking force and force from an accelerator pedal, generally, an acceleration of the vehicle may exhibit a significant change curve. When the head and tail of the vehicle are stressed, a longitudinal acceleration may change suddenly, and when the vehicle body is stressed, a lateral acceleration may change suddenly. When an oblique impact force is received, there may be a slightly sudden change in the longitudinal and lateral accelerations.

Based on the above cases, an object that has already collided may be used as a collection object, and then a plurality of sets of historical driving data in a collision scenario may be obtained. Then, feature vectors corresponding to each set of historical driving data are extracted. Specifically, the historical driving data may be combined into one-dimensional matrices. After the feature vectors corresponding to each set of historical driving data are obtained, the plurality of sets of feature vectors may be clustered based on the k-means algorithm or the like, to obtain at least one of the clustering centers that represents a collision. In other words, after Euclidean distance calculations are performed on the plurality of sets of one-dimensional matrices, a plurality of sets of historical driving data that have similar feature vectors may be clustered to obtain the at least one of the clustering centers. The historical driving data may include a lateral acceleration of the collection object, a lateral acceleration change rate of the collection object, a longitudinal acceleration of the collection object, and a longitudinal acceleration change rate of the collection object.

After the driving data of the object to be detected is obtained, the feature vector of the driving data of the object to be detected may be extracted, and then an Euclidean distance between the feature vector and the at least one of the clustering centers may be calculated; and collision risk scoring is performed based on at least one of the Euclidean distance, to obtain the second collision risk score.

In a specific implementation process, if there is one Euclidean distance, a first distance threshold corresponding to the Euclidean distance may be determined, and a score associated with the first distance threshold is determined as the second collision risk score based on an association relationship between the fitst distance threshold and the score; or if there are a plurality of Euclidean distances, because the smaller a value of the Euclidean distance, the higher a probability of a collision occurring in the current scenario, a minimum Euclidean distance and a second distance threshold corresponding to the minimum Euclidean distance may be determined, and a score associated with the second distance threshold is determined as the second collision risk score based on an association relationship between the preset second distance threshold and the score.

Step 103: Obtain a collision confidence level for the scenario data based on the first collision risk score for the perception data and the second collision risk score for the driving data.

In a specific implementation process, the collision confidence level for the scenario data may be obtained by processing the first collision risk score for the perception data and the second collision risk score for the driving data through weighted averaging or other methods.

Step 104: If the collision confidence level is greater than a preset confidence threshold, determine the scenario data as collision scenario data, and/or recall the scenario data.

In a specific implementation process, if the collision confidence level is greater than the preset confidence threshold, the scenario data may be determined as the collision scenario data, and/or the scenario data may be recalled, so that reliable data is provided for performance of autonomous driving perception and decision-making algorithms, to control the object to be detected, and to prevent collisions between the object to be detected and the target object. In addition, considerable data is also provided for vehicle abnormality diagnosis, accident liability determination, etc., to improve the reliability of vehicle abnormality diagnosis, accident liability determination, etc.

In a specific implementation process, if the collision confidence level is less than or equal to the preset confidence threshold, the scenario data may not be determined as the collision scenario data, and/or the scenario data may not be recalled. It is avoided that incorrect data is provided for autonomous driving perception and decision-making algorithms, vehicle abnormality diagnosis, accident liability determination, etc.

It should be noted that a data recall rate and data accuracy may be adjusted by adjusting the preset confidence threshold. For example, when the preset confidence threshold is set to a higher value, the data recall rate is lower, but the data accuracy is higher. On the contrary, when the preset confidence threshold is set to a lower value, the data recall rate is higher, but the data accuracy is lower. In this embodiment, the preset confidence threshold may be set according to actual requirements.

According to the method for detecting collision data in this embodiment, after the collision scenario data including the perception data about the surrounding target object and the driving data of the object to be detected are obtained, collision risk scoring is performed based on the perception data and the driving data separately, to obtain the first collision risk score for the perception data and the second collision risk score for the driving data; the collision confidence level for the scenario data is obtained based on the first collision risk score for the perception data and the second collision risk score for the driving data; and if the collision confidence level is greater than the preset confidence threshold, the scenario data is determined as the collision scenario data, and/or the scenario data is recalled, thereby realizing objective collection of the collision scenario data with a higher collision confidence level, and improving the reliability of the collision scenario data, thus helping improve the performance of autonomous driving perception and decision-making algorithms, and improving the reliability of vehicle abnormality diagnosis, accident liability determination, etc.

Further, the disclosure provides a method for controlling a driving device.

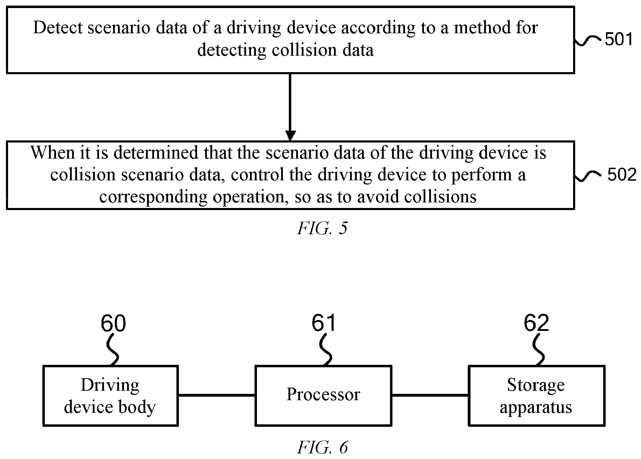

FIG. 5 is a schematic flowchart of main steps of a method for controlling a driving device according to an embodiment of the disclosure. As shown in FIG. 5, the method for controlling a driving device in this embodiment of the disclosure mainly includes step 501 to step 502 below.

Step 501: Detect scenario data of the driving device based on the method for detecting collision data.

In a specific implementation process, for a process of detecting the scenario data of the driving device using the method for detecting collision data, reference may be made to related records of the above embodiment, which is not be described again here. The driving device may be a vehicle, an intelligent robot, etc.

Step 501: When it is determined that the scenario data of the driving device is collision scenario data, control the driving device to perform a corresponding operation, so as to avoid collisions.

In a specific implementation process, when it is determined that the scenario data of the driving device is collision scenario data, it indicates that the driving device may collide with the target object, and in this case, the driving device may be controlled to perform a corresponding operation, so as to avoid collisions. For example, the driving device may be controlled to slow down, change the driving direction, etc.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure provides a driving device.

FIG. 6 is a block diagram of a main structure of a driving device according to an embodiment of the disclosure. As shown in FIG. 6, the driving device in this embodiment of the disclosure may include a driving device body 60, a processor 61, and a storage apparatus 62.

In a specific implementation process, the storage apparatus 62 may be configured to store a program for performing the method for detecting collision data or the method for controlling a driving device of the above method embodiments. The processor 61 may be configured to execute the program in the storage apparatus 62, where the program includes but is not limited to a program for performing the method for detecting collision data or the method for controlling a driving device of the above method embodiments. For ease of description, only parts related to the embodiments of the disclosure are shown. For specific technical details that are not disclosed, reference may be made to the method part of the embodiments of the disclosure.

In a specific implementation process, there are a plurality of storage apparatuses 62 and processors 61. The program for performing cthe method for detecting collision data of the above method embodiments may be divided into a plurality of sections of subprogram, and each section of subprogram may be loaded and executed by the processor 61 to perform different steps of the method for detecting collision data of the above method embodiments. Specifically, each section of subprogram may be stored in a different storage apparatus 62, and each processor 61 may be configured to execute programs in one or more storage apparatuses 62 to jointly implement the method for detecting collision data or the method for controlling a driving device of the above method embodiments. In other words, each processor 61 performs different steps of the method for detecting collision data or the method for controlling a driving device of the above method embodiments, to jointly implement the method for detecting collision data or the method for controlling a driving device of the above method embodiments.

The plurality of processors 61 may be processors deployed on a same device. For example, the above device may be a high-performance device composed of a plurality of processors. The plurality of processors 61 may be processors configured on the high-performance device. In addition, the plurality of processors 61 may alternatively be processors deployed on different devices. For example, the above device may be a server cluster, and the plurality of processors 61 may be processors on different servers in the server cluster.

Further, the disclosure further provides a computer-readable storage medium. In a computer-readable storage medium embodiment according to the disclosure, the computer-readable storage medium may be configured to store a program for performing the method for detecting collision data or the method for controlling a driving device of the above method embodiments, and the program may be loaded and executed by a processor to implement the above detection method for collision data or the method for controlling a driving device. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A method for detecting collision data, comprising:
obtaining scenario data of an object to be detected, wherein the scenario data includes at least perception data about a surrounding target object and driving data of the object to be detected;
calculating a collision risk score based on the perception data, to obtain a first collision risk score for the perception data; and calculating a collision risk score based on the driving data, to obtain a second collision risk score for the driving data;
obtaining a collision confidence level for the scenario data based on the first collision risk score for the perception data and the second collision risk score for the driving data; and
if the collision confidence level is greater than a preset confidence threshold, determining the scenario data as collision scenario data, and/or recalling the scenario data.

2. The method for detecting collision data according to claim 1, wherein the calculating a collision risk score based on the driving data, to obtain a second collision risk score for the driving data comprises:
extracting a feature vector of the driving data of the object to be detected;
calculating the Euclidean distance between the feature vector and at least one of the clustering centers; and
calculating a collision risk score based on at least one of the Euclidean distance, to obtain the second collision risk score.

3. The method for detecting collision data according to claim 2, wherein the calculating a collision risk score based on at least one of the Euclidean distance, to obtain the second collision risk score comprises:
if there is one Euclidean distance, determining a first distance threshold corresponding to the Euclidean distance, and determining the score associated with the first distance threshold as the second collision risk score based on the association relationship between the first distance threshold and the score; or
if there are a plurality of Euclidean distances, determining the minimum Euclidean distance and a second distance threshold corresponding to the minimum Euclidean distance, and determining the score associated with the second distance threshold as the second collision risk score based on the association relationship between the preset second distance threshold and the score.

4. The method for detecting collision data according to claim 2 or 3, further comprising:
obtaining a plurality of sets of historical driving data in a collision scenario;
extracting feature vectors corresponding to each set of historical driving data; and
clustering the plurality of sets of feature vectors to obtain at least one of the clustering centers.

5. The method for detecting collision data according to any one of claims 1 to 4, wherein the calculating a collision risk score based on the perception data, to obtain a first collision risk score for the perception data comprises:
determining status information of the target object based on the perception data;
determining a probability of collision between the object to be detected and the target object based on status information of the object to be detected and the status information of the target object; and
determining the first collision risk score for the perception data based on the probability of collision.

6. The method for detecting collision data according to claim 5, wherein the status information of the target object includes a predicted driving trajectory of the target object and/or a distance between the target object and the object to be detected; and
determining a probability of collision between the object to be detected and the target object based on status information of the object to be detected and the status information of the target object comprises:
determining the probability of collision between the object to be detected and the target object based on current path planning of the object to be detected and the predicted driving trajectory of the target object; and/or
determining the probability of collision between the object to be detected and the target object based on the association relationship between the presetdistance and the probability of collision.

7. The method for detecting collision data according to claim 5 or 6, wherein the determining a probability of collision between the object to be detected and the target object based on current path planning of the object to be detected and the predicted driving trajectory of the target object comprises:
if there is one predicted driving trajectory, determining a first probability of collision between the object to be detected and the target object on the predicted driving trajectory as the probability of collision between the object to be detected and the target object based on the current path planning of the object to be detected; or
if there are a plurality of predicted driving trajectories, determining a second probability of collision between the object to be detected and the target object on each of the predicted driving trajectories based on the current path planning of the object to be detected, and determining an overall probability of collision between the object to be detected and the target object as the probability of collision between the object to be detected and the target object based on the second probabilities of collision corresponding to all the predicted driving trajectories.

8. A driving device, comprising a driving device body, a processor, and a storage apparatus configured to store a plurality of program codes, wherein the program codes are adapted to be loaded and executed by the processor to perform the method for detecting collision data according to any one of claims 1 to 7.

9. A non-transitory computer-readable storage medium storing a plurality of program codes, wherein the program codes are adapted to be loaded and executed by a processor to perform a method for detecting collision data according to any one of claims 1 to 7.
